# EUROPÄISCHE PATENTSCHRIFT

(11) **EP 3 027 986 B1**
(45) Veröffentlichungstag und Bekanntmachung des Hinweises auf die Patenterteilung: **22.04.2020**
(21) Anmeldenummer: 14748119.6
(22) Anmeldetag: 31.07.2014
(51) Int. Cl.: F25D 23/06, F16L 59/06

(54) **KÜHL- UND/ODER GEFRIERGERÄT MIT EINEM VAKUUMDÄMMKÖRPER**
REFRIGERATOR AND/OR FREEZER WITH A VACUUM INSULATION BODY
RÉFRIGÉRATEUR ET/OU CONGÉLATEUR AVEC UN ÉLÉMENT D'ISOLATION SOUS VIDE

(30) Priorität: 31.07.2013 DE 102013012796; 02.09.2013 DE 102013014614
(43) Veröffentlichungstag der Anmeldung: 08.06.2016
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: GRUIDL, Thomas, A-9781 Oberdrauburg (AT); HIEMEYER, Jochen, 97753 Karlstadt (DE); KERSTNER, Martin, 97072 Würzburg (DE); FREITAG, Michael, 97082 Würzburg (DE); GRADL, Manfred, A-9781 Oberdrauburg (AT)
(74) Vertreter: Herrmann, Uwe
(86) Internationale Anmeldenummer: PCT/EP2014/002118
(87) Internationale Veröffentlichungsnummer: WO 2015/014500

(56) Entgegenhaltungen:
- CN-C- 1 087 417
- JP-A- 2004 020 149
- JP-A- 2004 028 349
- JP-A- 2005 076 725

## Beschreibung

Die vorliegende Erfindung betrifft ein Kühl- und/oder Gefriergerät mit einem Vakuumdämmkörper mit wenigstens einer vakuumdichten Folie, die einen Vakuumbereich mit wenigstens einem darin angeordneten Stützmaterial umgibt und mit wenigstens einer Schutzhülle zum Schutz der genannten Folie.

Aus dem Stand der Technik ist es bekannt, beispielsweise bei Kühl- und/oder Gefriergeräten Vakuumdämmkörper in Form von Paneelen einzusetzen, die die Aufgabe haben, einen Wärmedurchgang von der Umgebungsatmosphäre des Gerätes in den gekühlten Innenraum möglichst zu verhindern.

Diese Vakuumdämmkörper bestehen üblicherweise aus einer vakuumdichten Folie, die ein Stütz- bzw. Füllmaterial umgibt. Dieses Stützmaterial verleiht dem Vakuumdämmkörper die benötigte Formstabilität und verhindert, dass die Wandungen des Vakuumdämmkörpers, d. h. die Folien nach der Vakuumerzeugung unmittelbar aneinanderliegen.

Bei diesem Füllmaterial kann es sich beispielsweise um ein poröses Material oder auch um eine Schüttung handeln.

Aus dem Stand der Technik ist es des Weiteren bekannt, die genannte Folienhülle des Vakuumkerns bzw. des Vakuumdämmkörpers mit einer Schutzhülle zu versehen bzw. durch eine Schutzhülle vor Beschädigungen zu schützen. Diese Schutzhülle kann zugleich als Oberfläche des Vakuumdämmkörpers dienen und muss in diesem Fall bestimmten optischen oder auch funktionellen Ansprüchen genügen.

Aus dem Bereich der Kühl- und/oder Gefriergeräte ist es bekannt, eine Blechwandung als Schutzhülle zu verwenden. Diese Blechwandung, die gleichzeitig als Außenwandung des Korpus oder der Tür oder eines sonstigen Verschlusselementes dienen kann, stellt einen guten Schutz vor Beschädigungen dar. Ein Nachteil besteht allerdings darin, dass zum Erzielen einer glatten, optisch hochwertigen Oberfläche das Erfordernis besteht, dass Unebenheiten des Vakuumdämmkörpers vermieden werden müssen, da diese ansonsten im Blech auftreten bzw. dort sichtbar sind.

Beispielsweise weisen folienumhüllte Vakuumdämmkörper mit einem Pulverkern minimale lokale Dichteunterschiede im Pulverkern auf, die aufgrund des sehr hohen auf der Folie des Vakuumdämmkörpers lastenden Druckes von beispielsweise 10t/m² zu derartigen Unebenheiten führen können.

Wird zwischen den Wandungen, d. h. zwischen der Innenwand und der Außenwand eines Kühl- bzw. Gefriergerätes nur ein solcher Vakuumdämmkörper und keine weiteren Dämmmaterialien, wie beispielsweise eine Ausschäumung vorgesehen, sind besonders hohe Ansprüche an die Vermeidung von Unebenheiten des Vakuumdämmkörpers zu stellen.

Das Dokument JP 2005 076725 A offenbart ein Kühl- und/oder Gefriergerät gemäß dem Oberbegriff des Anspruchs 1.

Der vorliegenden Erfindung liegt daher die Aufgabe zugrunde, einen Vakuumdämmkörper der eingangs genannten Art dahingehend weiterzubilden, dass das Auftreten von Unebenheiten insbesondere auf Blechwandungen von Kühl- bzw. Gefriergeräten wirksam vermieden wird.

Diese Aufgabe wird durch einen Vakuumdämmkörper mit den Merkmalen des Anspruchs 1 gelöst. Danach ist vorgesehen, dass sich auf der Folie ein Unebenheiten der Folie ausgleichendes Material befindet und/oder dass sich in dem Bereich zwischen der Folie und der genannten Schutzhülle zumindest bereichsweise ein Unebenheiten zwischen der Folie und der Schutzhülle ausgleichendes Material befindet.

Bei diesem Material handelt es sich um ein aushärtbares bzw. bereits ausgehärtetes Material.

Durch das Aufbringen bzw. Einbringen eines solchen Materials lassen sich Unebenheiten auf der Außenseite der Folie des Vakuumdämmkörpers einfach und wirksam ausgleichen. Dies wiederum führt dazu, dass eine angrenzende Blechwandung oder dergleichen hohen optischen Ansprüchen genügt, da Unebenheiten nicht übertragen werden können, da diese durch das genannte Material ausgeglichen sind.

Das Material bildet gleichzeitig die Schutzhülle zum Schutz der genannten Vakuumfolie und schützt diese vor Beschädigungen.

Auch ist es denkbar, dass in dem Bereich zwischen Folie und Schutzhülle, wie beispielsweise einer Blechwandung eines Kühl- und Gefriergerätes zumindest bereichsweise ein Unebenheiten zwischen der Folie und der Schutzhülle ausgleichendes Material vorliegt.

Wie ausgeführt handelt es sich bei dem Material um ein aushärtbares bzw. im ausgehärteten Zustand vorliegendes Material. Dieses Material kann eine Hartkunststoffhülle bilden, die zumindest auf die Seite des Vakuumdämmkörpers platziert wird, auf der Unebenheiten vorliegen. Auch ist es denkbar, dass die Schutzhülle den Vakuumdämmkörper allseitig, d. h. vollumfänglich umgibt.

Vorzugsweise erfolgt die Aushärtung des Hartkunststoffs am Dämmkörper. Dadurch werden Unebenheiten kaschiert.

Wie bereits oben ausgeführt bildet das Material selbst die Schutzhülle oder einen Teil der Schutzhülle des Vakuumdämmkörpers und schützt die Folie des Vakuumdämmkörpers vor Beschädigungen.

In der Erfindung ist vorgesehen, dass die Schutzhülle durch die Außenwand des Kühl- und/oder Gefriergerätes gebildet wird. In einer weiteren Ausgestaltung, nicht Teil der vorliegenden Erfindung, ist vorgesehen, dass die Schutzhülle durch eine Blechwand gebildet wird. In diesem Fall ist es möglich, dass zwischen der Folie des Vakuumdämmkörpers und der Blechwand, die in diesem Fall die Schutzhülle bildet, das Material eingebracht wird, wodurch Unebenheiten der Folie ausgeglichen werden und sichergestellt ist, dass das Blech keine Verformungen aufweist, sondern eben ausgeführt ist und somit hohen optischen Ansprüchen genügt.

Vorzugsweise handelt es sich bei dem Material, mittels dessen die Unebenheiten ausgeglichen werden, um ein Kunststoffmaterial und insbesondere um eine Hartkunststoffhülle. Diese wird in einer fluiden Form aufgebracht, beispielsweise als Gießharz und härtet dann in der gewünschten Art und Weise aus.

In einer bevorzugten Ausgestaltung der Erfindung ist somit vorgesehen, dass es sich bei dem Material um Gießharz handelt.

Weiterhin kann vorgesehen sein, dass es sich bei dem Material um ein Material auf der Basis eines Epoxidharzes oder auf der Basis von Polyurethan handelt.

Die eigentliche Schichtdicke des Materials kann im Bereich von 1 cm oder weniger und vorzugsweise im Bereich von 5 mm oder weniger liegen. Hinreichend ist es, wenn die Schichtdicke des Materials so bemessen ist, dass sich insgesamt eine Ebene bzw. glatte Oberfläche des Vakuumdämmkörpers ergibt.

Durch eine geeignete Wahl von Produktionsparametern ist es möglich, einen Vakuumdämmkörper derart zu erzeugen, dass die Unebenheiten nur auf einer Seite des Vakuumdämmkörpers vorliegen. In diesem Fall ist es ausreichend, dass ausgleichende Material nur auf dieser Seite des Vakuumdämmkörpers anzuordnen.

Die vorliegende Erfindung betrifft ein Kühl- und/oder Gefriergerät mit wenigstens einer den gekühlten Innenraum begrenzenden Innenwand und mit wenigstens einer davon beabstandeten Außenwand, wobei sich in dem Zwischenraum zwischen Innen- und Außenwand wenigstens ein Vakuumdämmkörper befindet.

Außer dem genannten Vakuumdämmkörper liegt keine weitere Wärmedämmung, wie beispielsweise eine Ausschäumung vor. Insbesondere in diesem Fall ist es von Bedeutung, dass das ausgleichende Material eingebracht wird, damit Unebenheiten des Vakuumdämmkörpers selbst nicht auf eine Blechwand oder dergleichen übertragen werden und dort sichtbar sind. Nicht Teil der Erfindung, sind auch Kühl- bzw. Gefriergeräte offenbart, in denen eine Ausschäumung als Wärmeisolationsmaterial vorliegt.

Die vorliegende Erfindung bezieht sich somit auf einen folienumhüllten Vakuumdämmkörper, bei dem zumindest in einem Teilbereich Unebenheiten auf der Folienoberfläche mit einem aushärtenden bzw. ausgehärteten Material ausgeglichen werden, wobei das ausgehärtete Material im gehärteten Zustand die Schutzhülle des Vakuumdämmkörpers bildet.

Offenbart, aber nicht Teil der Erfindung, ist der Fall, dass ein folienumhüllter Vakuumdämmkörper vorgesehen ist, von dem zumindest in einem Teilbereich Unebenheiten auf der Folienoberfläche ausgeglichen werden, und zwar indem zwischen der Folienhülle des Vakuumdämmkörpers und einer Systemhülle, wie beispielsweise einem Blech eine vorzugsweise wenige Millimeter dünne Schicht aus einem ausgehärteten bzw. aushärtbaren Material eingebracht ist.

Wie oben ausgeführt handelt es sich bei dem Material um ein solches, das im Verarbeitungszustand fluid ist und sodann aushärtet. In Betracht kommen Kunststoff und insbesondere Gießharze (Materialien auf Basis von Epoxidharzen oder Polyurethan).

Weitere Einzelheiten und Vorteile der Erfindung werden anhand eines im Folgenden beschriebenen Ausführungsbeispiels näher erläutert:
Das Ausführungsbeispiel betrifft ein Kühl- bzw. Gefriergerät mit einer Außenwand, die die Außenseite des Korpus oder der Tür oder eines sonstigen Verschlusselementes bildet sowie einer Innenwand, die den Innenbehälter bzw. die Innenseite der Tür bildet.

Zwischen der Außenwand und der Innenwand befindet sich ein Vakuumdämmkörper, der aus einem Stützkern besteht sowie aus einer diesen umgebenden Hochbarrierefolie bzw. vakuumdichten Folie, in der Vakuum herrscht.

Außer diesem genannten Vakuumdämmkörper befindet sich zwischen Außen- und Innenwand keine weitere Wärmeisolation.

Wie oben ausgeführt kann es aufgrund von Dichteunterschieden in dem Kern, der vorzugsweise als Schüttung ausgeführt ist dazu kommen, dass auf der Oberfläche des Vakuumdämmkörpers Unebenheiten vorliegen, bei denen die Gefahr besteht, dass diese auf der Gehäuseaußenseite, d. h. auf dem Blechmantel sichtbar sind bzw. auf diesen übertragen werden.

Um dieses Phänomen zu vermeiden, ist vorgesehen, dass die Folie des Vakuumdämmkörpers mit einem fließfähigen Kunststoff überstrichen bzw. versehen wird, der so platziert wird, dass die Unebenheiten der unebenen Seite des Vakuumdämmkörpers ausgeglichen werden. Dieser Kunststoff bzw. Harzkunststoff härtet noch am Dämmkörper aus und bildet eine ebene Oberfläche des Vakuumdämmkörpers.

Der Kunststoff besteht aus einem Gießharz, beispielsweise auf Basis eines Epoxidharzes. Nicht Teil der Erfindung ist, dass diese aus Harz bestehende Schutzhülle an die benachbarte Wandung, beispielsweise an die Außenwandung eines Kühl- bzw. Gefriergerätes angrenzt.

Vorzugsweise, aber nicht Teil der Erfindung, ist vorgesehen, dass sich zwischen der Außenhaut des Kühl- bzw. Gefriergerätes bzw. dem Blechmantel und der genannten Schutzhülle kein weiteres Dämmmaterial, wie beispielsweise eine Ausschäumung, befindet. Von der Erfindung ist nicht die Variante umfasst, dass außer dem wenigstens einem Vakuumdämmkörper weitere wärmeisolierende Materialien, wie beispielsweise eine Ausschäumung, verwendet werden.

## Patentansprüche

1. Kühl- und/oder Gefriergerät mit
einer den gekühlten Innenraum begrenzenden Innenwand, und
einer davon beabstandeten Außenwand, wobei
sich in dem Zwischenraum zwischen Innenwand und Außenwand ein Vakuumdämmkörper befindet,
der Vakuumdämmkörper eine vakuumdichte Folie aufweist, die einen Vakuumbereich mit einem darin angeordneten Stützmaterial umgibt,
der Vakuumdämmkörper eine Schutzhülle zum Schutz der genannten Folie aufweist,
sich auf der Folie ein Unebenheiten der Folie ausgleichendes Material befindet und/oder dass sich in dem Bereich zwischen Folie und Schutzhülle zumindest bereichsweise ein Unebenheiten zwischen der Folie und der Schutzhülle ausgleichendes Material befindet, wobei das Material ein aushärtbares Material ist, das am Vakuumdämmkörper ausgehärtet ist,
**dadurch gekennzeichnet, dass**
außer dem genannten Vakuumdämmkörper keine weitere Wärmedämmung in dem Zwischenraum vorliegt, und
das Material selbst die Schutzhülle oder einen Teil der Schutzhülle bildet, die die Außenwand des Kühl- und/oder Gefriergeräts bildet.

2. Kühl- und/oder Gefriergerät nach einem der vorhergehenden Ansprüche, **dadurch gekennzeichnet, dass** es sich bei dem Material um ein Kunststoffmaterial handelt.

3. Kühl- und/oder Gefriergerät nach einem der vorhergehenden Ansprüche, **dadurch gekennzeichnet, dass** es sich bei dem Material um ein Gießharz handelt.

4. Kühl- und/oder Gefriergerät nach einem der vorhergehenden Ansprüche, **dadurch gekennzeichnet, dass** es sich bei dem Material um ein Material auf der Basis eines Epoxidharzes oder auf Basis von Polyurethan handelt.

5. Kühl- und/oder Gefriergerät nach einem der vorhergehenden Ansprüche, **dadurch gekennzeichnet, dass** die Schichtdicke des Materials im Bereich von < 1 cm und vorzugsweise im Bereich von < 5 mm liegt.

6. Kühl- und/oder Gefriergerät nach einem der vorhergehenden Ansprüche, **dadurch gekennzeichnet, dass** die durch das Material ausgeglichenen Unebenheiten nur auf einer Seite des Vakuumdämmkörpers vorliegen.

## Claims

1. A refrigerator and/or freezer, comprising
an inner wall defining the cooled interior space, and
an outer wall spaced apart therefrom, wherein
in the space between inner wall and outer wall a vacuum insulation body is located,
the vacuum insulation body includes a vacuum-tight film which surrounds a vacuum region with a supporting material arranged therein,
the vacuum insulation body includes a protective cover for the protection of said film,
a material leveling out irregularities of the film is located on the film and/or that in the region between the film and the protective cover a material leveling out irregularities between the film and the protective cover is located at least in certain areas, wherein the material is a curable material which is cured on the vacuum insulation body,
**characterized in that**
apart from said vacuum insulation body no further heat insulation is present in the interspace, and
the material itself forms the protective cover or a part of the protective cover that forms the outer wall of the refrigerator and/or freezer.

2. The refrigerator and/or freezer according to any of the preceding claims, **characterized in that** the material is a plastic material.

3. The refrigerator and/or freezer according to any of the preceding claims, **characterized in that** the material is a cast resin.

4. The refrigerator and/or freezer according to any of the preceding claims, **characterized in that** the material is a material on the basis of an epoxy resin or on the basis of polyurethane.

5. The refrigerator and/or freezer according to any of the preceding claims, **characterized in that** the layer thickness of the material lies in the range of < 1 cm and preferably in the range of < 5 mm.

6. The refrigerator and/or freezer according to any of the preceding claims, **characterized in that** the irregularities leveled out by the material are present only on one side of the vacuum insulation body.

## Revendications

1. Réfrigérateur et/ou congélateur comportant
une paroi intérieure délimitant l'espace intérieur refroidi, et
une paroi extérieure espacée de celle-ci, dans lequel
un élément d'isolation sous vide se trouve dans l'espace entre la paroi intérieure et la paroi extérieure,
l'élément d'isolation sous vide comprend une feuille étanche au vide, qui entoure une région sous vide avec un matériau support disposé à l'intérieur, l'élément d'isolation sous vide comprend une enveloppe protectrice pour la protection de ladite feuille,
un matériau compensant des irrégularités de la feuille se trouve sur la feuille et/ou qu'un matériau compensant des irrégularités entre la feuille et l'enveloppe protectrice se trouve dans la région entre la feuille et l'enveloppe protectrice au moins par zones, le matériau étant un matériau durcissable, qui est durci sur l'élément d'isolation sous vide,
**caractérisé en ce que**
sauf ledit élément d'isolation sous vide aucune autre isolation thermique est présent dans l'espace intermédiaire,
le matériau lui-même forme l'enveloppe protectrice ou une partie de l'enveloppe protectrice, qui forme la paroi extérieure du réfrigérateur et/ou congélateur.

2. Réfrigérateur et/ou congélateur selon l'une quelconque des revendications précédentes, **caractérisé en ce que** le matériau est un matériau plastique.

3. Réfrigérateur et/ou congélateur selon l'une quelconque des revendications précédentes, **caractérisé en ce que** le matériau est une résine de coulée.

4. Réfrigérateur et/ou congélateur selon l'une quelconque des revendications précédentes, **caractérisé en ce que** le matériau est un matériau à base d'une résine époxy ou à base de polyuréthane.

5. Réfrigérateur et/ou congélateur selon l'une quelconque des revendications précédentes, **caractérisé en ce que** l'épaisseur de couche du matériau est de l'ordre de < 1 cm et de préférence de l'ordre de < 5 mm.

6. Réfrigérateur et/ou congélateur selon l'une quelconque des revendications précédentes, **caractérisé en ce que** les irrégularités compensées par le matériau sont présentes seulement sur un côté de l'élément d'isolation sous vide.
